# EUROPEAN PATENT APPLICATION

(11) **EP 2 810 787 A1**
(43) Date of publication of application: **10.12.2014**
(21) Application number: 12839332.9
(22) Date of filing: 02.05.2012
(51) Int. Cl.: B44F 1/02, B44F 1/06, G09F 13/04

(54) **LIGHT-REFLECTION/LIGHT-TRANSMISSION IMAGE SHEET AND METHOD FOR FORMING LIGHT-REFLECTION/LIGHT-TRANSMISSION IMAGE SHEET**

(30) Priority: 12.10.2011 JP 2011225297
(71) Applicant: Photo Craft Co., Ltd, Toyonaka-shi Osaka 561-0864 (JP)
(72) Inventor: MATSUMOTO Iwao, Toyonaka-shi Osaka 561-0864 (JP)
(74) Representative: Hofmann, Andreas
(86) International application number: PCT/JP2012/061610
(87) International publication number: WO 2013/054560

(57) **Abstract**

In order to enable a natural and clear image to appear in both light reflection and light transmission usage modes of a light-reflection/light-transmission image sheet having front and back-side images (3, 4) overlying each other with a sheet-like base material (2) that is reflective and transmissive interposed therebetween, the density distribution of the back-side image (4) of the light-reflection/light-transmission image sheet is obtained by reducing a high-density portion (N1) that exceeds a set density α in the density distribution of the front-side image (3), to the set density α or a density close in value thereto.

## Description

### Technical Field

The present invention relates to an image sheet for forming an advertisement panel or the like arranged in station premises, a hotel, a department store, or the like and a method for forming an image sheet, and particularly relates to a light-reflection/light-transmission image sheet including front and back images overlying each other with a sheet-like base material that is reflective and transmissive interposed therebetween, and a method for forming a light-reflection/light-transmission image sheet.

### Background Art

This type of image sheet uses a translucent or milk-white sheet-like base material having both a reflectance and a transmittance (or transmission rate) to a certain extent, and thereby produces colour by transmitting light emitted from the back (back light) during night-time and produces colour by reflecting sunlight during day-time, and in order to compensate for the amount of colour produced using the reflected light during day-time and the transmitted light during night-time, an image is formed not only on the front side of the sheet-like base material but also on the back side such that the image on the back side is the reversed front-side image.

Conventionally, both of the images formed on the front and back of the sheet-like base material have the same density distribution (there is no appropriate patent literature disclosing this conventional technique).

### Disclosure of the Invention

### Problem to be Solved by the Invention

However, if the density distribution of the image is determined such that a natural and clear image appears in a light reflection usage mode, the contrast intensifies in a usage mode using light that transmits both the front and back images, and the above-mentioned conventional image sheet tends to lack naturalness and clarity.

The present invention has been made in view of the above circumstance, and it is an object of the present invention to, according to logical improvements, provide a light-reflection/light-transmission image sheet that enables a natural and clear image to appear in both the light reflection and light transmission usage modes, and to provide a method for forming a light-reflection/light-transmission image sheet according to which this type of light-reflection/light-transmission image sheet can be formed efficiently.

### Means for Solving Problem

A first characteristic configuration of the present invention is a light-reflection/light-transmission image sheet that includes, on a sheet-like base material that has reflective and transmissive properties, a front-side image and a back-side image that overlie each other with the sheet-like base material interposed therebetween,
wherein the density distribution of the back-side image is a density distribution in which a high-density portion that exceeds a set density in the density distribution of the front-side image has been reduced to the set density or a density close in value thereto.

According to the above configuration, in the back-side image, the densities of a high-density portion that has a large additive effect on colour production and has a large influence on the overall contrast in the light transmission usage mode are reduced, and therefore the case where the contrast intensifies in the light transmission usage mode can be effectively inhibited, and this enables a natural and clear image to appear in both the light reflection and light transmission usage modes.

Moreover, the density adjustment for the back-side image is performed using a simple adjustment method in which a high-density portion in the front-side image is reduced to a set density or a density that is close in value thereto, and therefore the density adjustment for the back-side image can be made simple and manufacture can be made easy.

In a second characteristic configuration of the present invention, the set density is set for each of a plurality of set colour segments, and the density distribution of the back-side image is a density distribution in which a high-density portion that exceeds the set density for a corresponding set colour segment in the density distribution for the corresponding set colour segment of the front-side image has been reduced to the set density for the corresponding set colour segment or a density close in value thereto.

In other words, it is conceivable that the additive effect on colour production in the light transmission usage mode in the back-side image varies depending on various elements of colour such as luminance, but according to the above configuration, the density distribution of the back-side image is a density distribution in which a high-density portion for the corresponding set colour segment of the front-side image has been reduced to a set density for the corresponding set colour segment or to a density close in value thereto, and therefore by appropriately setting the colour segments such that the above-mentioned effect of adding is desirable, an even more natural and clear image can appear in both the light reflection and light transmission usage modes.

A third characteristic configuration of the present invention is a method for forming a light-reflection/light-transmission image sheet including front and back images overlying each other with a sheet-like base material interposed therebetween, the light-reflection/light-transmission image sheet being formed by printing a front-side image on the front side of a sheet-like base material that has reflective and transmissive properties, and printing a back-side image that is the reverse of the front-side image on the back side of the sheet-like base material in a state where the front and back images overlie each other,
wherein when printing the back-side image on the back side of the sheet-like base material, the density distribution of the back-side image is a density distribution in which a high-density portion that exceeds a set density in the density distribution of the front-side image has been replaced with the set density or a density that is close in value thereto.

In other words, according to the configuration above, the densities of a high-density portion that has a large additive effect on colour production and has a large influence on contrast in the light transmission usage mode are decreased in the back-side image, and therefore the case where the contrast intensifies in the light transmission usage mode can be effectively inhibited, and a light-reflection/light-transmission image sheet can be formed which enables a clear and natural image to appear in both the light reflection and light transmission usage modes.

Moreover, the density adjustment for the back-side image is performed using a simple adjustment method in which a high-density portion in the front-side image is reduced to a set density or a density that is close in value thereto, and therefore the density adjustment for the back-side image can be performed easily.

In a fourth characteristic configuration of the present invention, the density distribution of the back-side image is a density distribution in which a high-density portion that exceeds the set density in the density distribution of the front-side image has been replaced with the set density or a density close in value thereto and a portion that is not included in the high-density portion in the density distribution of the front-side image has the same densities as the front-side image.

According to the above configuration, the density distribution of the back-side image is obtained by replacing the high-density portion in the density distribution of the front-side image with the set density or a density that is close in value thereto, or in other words, by adding processing to only the high-density portion in the density distribution of the front-side image, and therefore the density adjustment for the back-side image can be performed even more simply compared to the case where, for example, the density distribution of the back-side image is obtained by adding processing to the portion that is not included in the high-density portion in the density distribution of the front-side image in addition to the high-density portion in the density distribution of the front-side image.

In a fifth characteristic configuration of the present invention, the set density is set for each of a plurality of set colour segments, and the density distribution of the back-side image is a density distribution in which a high-density portion that exceeds the set density for a corresponding set colour segment in the density distribution for the corresponding set colour segment of the front-side image has been replaced with the set density for the corresponding set colour segment or a density close in value thereto.

In other words, it is conceivable that the additive effect on colour production in the light transmission usage mode in the back-side image varies depending on various elements of colour such as luminance, but according to the above configuration, the density distribution of the back-side image is a density distribution in which a high-density portion for the corresponding set colour segment of the front-side image has been reduced to a set density for the corresponding set colour segment or to a density close in value thereto, and therefore by appropriately setting the colour segments such that the above-mentioned additive effect is desirable, an even more natural and clear image can appear in both the light reflection and light transmission usage modes.

In a sixth characteristic configuration of the present invention, the set colour segment is a colour segment corresponding to a colour expressed in a colour space.

In other words, with an apparatus that handles colour such as an image processing apparatus (e.g., a personal computer) or a printing apparatus, a processing method of identifying colours using a colour space (e.g., a CMYK colour space or an RGB colour space) is employed, a according to the configuration above, colour segments corresponding to colours expressed in a colour space are used as the set segments, and therefore by using a processing method for an apparatus that handles colour such as an image processing apparatus or a printing apparatus, it is possible to allow that apparatus to perform density adjustment processing for the back-side image.

Accordingly, the density adjustment for the back-side image can be easily performed also when employing a method for reducing the densities for the corresponding set colour segments.

In a seventh characteristic configuration of the present invention, the set colour segment is a colour segment corresponding to an ink colour.

In other words, with a printing apparatus such as an ink jet printer or a colour printer, an image is printed using a plurality of ink colours, and therefore densities corresponding to the ink colours are determined at the time of printing. In response to this, according to the configuration above, the set colour segments are colour segments that correspond to ink colours, and therefore the density adjustment processing for the back-side image performed using the printing apparatus can be simplified compared to the case where the colour segments are set so as to span a plurality of ink colours.

Accordingly, the density adjustment for the back-side image can be easily performed also when employing a method for reducing the densities for corresponding set colour segments. Note that it is particularly preferable that the set colour segment is a colour segment corresponding to a CMYK colour, which corresponds to a colour expressed in a colour space and to an ink colour.

In an eighth characteristic configuration, the set density is changed according to the transmittance of the sheet-like base material.

In other words, it is conceivable that the additive effect on colour production in the back-side image in the light transmission usage mode changes unexpectedly according to the transmittance of the sheet-like base material, but according to the configuration above, the set density is changed according to the transmittance of the sheet-like base material, and therefore the case where the additive effect changes unexpectedly according to the transmittance of the sheet-like base material can be effectively inhibited.

Accordingly, it is possible to form a light-reflection/light-transmission image sheet that enables a natural and clear image to appear in both the light reflection and light transmission usage modes, regardless of the transmittance of the sheet-like base material.

In a ninth characteristic configuration of the present invention, the densities of at least one or more apparent high-density portions in the front-side image are measured using a densitometer in order to determine the set density.

According to the configuration above, the actual densities of apparent high-density portions that are close to high-density portions in the front-side image that need density adjustment in the back-side image can be obtained as samples, and therefore accurate information that corresponds to the actual circumstances can be obtained more easily than in the case of obtaining density data values for all locations based on output image data for the front-side image and the like, for example, and according to this, a set density that corresponds to the actual circumstances can be obtained.

In a tenth characteristic configuration of the present invention, the densities of at least one or more portions that are not included in the high-density portions in the front-side image are furthermore measured using a densitometer in order to determine the set density.

According to the configuration above, the actual densities of portions that are not included in the high-density portions in the front-side image can be obtained as samples, and therefore the actual contrast of the front-side image can be taken into consideration, and according to this, a set density that corresponds even more with the actual circumstances can be obtained.

An eleventh characteristic configuration of the present invention is a light-reflection/light-transmission image sheet that includes, on a sheet-like base material that has reflective and transmissive properties, a front-side image and a back-side image that overlie each other with the sheet-like base material interposed therebetween,
wherein the density distribution of the back-side image is a density distribution in which the densities in the density distribution of the front-side image have been compressed using a set compression rate.

In other words, according to the configuration above, the density distribution of the back-side image is a density distribution in which the densities in the density distribution of the front-side image have been compressed using a set compression rate, or in other words, in which the density distribution of the front-side image has been compressed using the set compression rate so as to reduce the densities thereof.

That is to say, the density distribution of the back-side image is obtained by reducing the density distribution of the front-side image in a mode where the amount of reduction increases as the density is further on the high-density side, which has a large additive effect on colour production and has a large influence on the overall contrast in the light transmission usage mode, and therefore the case where the contrast intensifies in the light transmission usage mode can be effectively inhibited, and this enables a natural and clear image to appear in both the light reflection and light transmission usage modes.

Moreover, the density adjustment for the back-side image is performed using a simple adjustment method in which the density distribution of the front-side image is uniformly compressed using the set compression rate so as to reduce the densities thereof, and therefore the density adjustment for the back-side image can be made simple and manufacture can be made easy.

In a twelfth characteristic configuration of the present embodiment, the set compression rate is determined for each of a plurality of set colour segments, and the density distribution of the back-side image is a density distribution in which the densities in the density distribution for a corresponding set colour segment of the front-side image have been compressed using the set compression rate for the corresponding set colour segment.

In other words, it is conceivable that the additive effect on colour production in the light transmission usage mode in the back-side image varies depending on various elements of colour such as luminance, but according to the above configuration, the density distribution of the back-side image is a density distribution in which the densities in the density distribution for the corresponding set colour segment of the front-side image have been compressed using the set compression rate for the corresponding set colour segment, and therefore by appropriately setting the colour segments such that the above-mentioned additive effect is desirable, an even more natural and clear image can appear in both the light reflection and light transmission usage modes.

A thirteenth characteristic configuration of the present invention is a method of forming a light-reflection/light-transmission image sheet including front and back images overlying each other with a sheet-like base material interposed therebetween, the light-reflection/light-transmission image sheet being formed by printing a front-side image on the front side of a sheet-like base material that has reflective and transmissive properties, and printing a back-side image that is the reverse of the front-side image on the back side of the sheet-like base material in a state where the front and back images overlie each other,
wherein when printing the back-side image on the back side of the sheet-like base material, the density distribution of the back-side image is a density distribution in which the densities in the density distribution of the front-side image have been compressed using a set compression rate.

According to the configuration above, the density distribution of the back-side image is a density distribution in which the densities in the density distribution of the front-side image have been compressed using a set compression rate, or in other words, in which the density distribution of the front-side image has been compressed using the set compression rate so as to reduce the densities thereof.

That is to say, the density distribution of the back-side image is obtained by reducing the density distribution of the front-side image using a mode where the amount of reduction increases as the density is further on the high-density side, which has a large additive effect on colour production and has a large influence on the overall contrast in the light transmission usage mode, and therefore the case where the contrast intensifies in the light transmission usage mode can be effectively inhibited, and a light-reflection/light-transmission image sheet can be formed which enables a natural and clear image to appear in both the light reflection and light transmission usage modes.

Moreover, the density adjustment for the back-side image is performed using a simple method in which the density distribution of the front-side image is compressed using the set compression rate so as to reduce the densities thereof, and therefore the density adjustment for the back-side image can be performed easily.

In a fourteenth characteristic configuration of the present embodiment, the set compression rate is determined for each of a plurality of set colour segments, and the density distribution of the back-side image is a density distribution in which the densities in the density distribution for a corresponding set colour segment of the front-side image have been compressed using the compression rate for the corresponding set colour segment.

In other words, it is conceivable that the additive effect on colour production in the light transmission usage mode in the back-side image varies depending on various elements of colour such as luminance, but according to the above configuration, the density distribution of the back-side image is a density distribution in which the densities in the density distribution for the corresponding set colour segment of the front-side image have been compressed using the set compression rate for the corresponding set colour segment, and therefore by appropriately setting the colour segments such that the above-mentioned additive effect is desirable, a light-reflection/light-transmission image sheet can be formed which enables an even more natural and clear image to appear in both the light reflection and light transmission usage modes.

In a fifteenth characteristic configuration of the present invention, the set colour segment is a colour segment corresponding to a colour expressed in a colour space.

According to the configuration above, similarly to the sixth characteristic configuration, it is possible to allow an apparatus that handles colour such as an image processing apparatus or a printing apparatus to perform the density adjustment processing for the back-side image using the processing method for that apparatus. Accordingly, the density adjustment for the back-side image can be easily performed also when employing a method for reducing the densities for corresponding set colour segments.

In a sixteenth characteristic configuration of the present invention, the set colour segment is a colour segment corresponding to an ink colour.

According to the configuration above, similarly to the above-described seventh characteristic configuration, the density adjustment processing for the back-side image performed using the printing apparatus can be simplified compared to the case where the colour segments are set so as to span a plurality of ink colours. Accordingly, the density adjustment for the back-side image can be easily performed also when employing a method for reducing the densities for corresponding set colour segments. Note that it is particularly preferable that the set colour segment is a colour segment corresponding to a CMYK colour, which corresponds to a colour expressed in a colour space and to an ink colour.

In a seventeenth characteristic configuration, the set compression rate is changed according to the transmittance of the sheet-like base material.

According to the configuration above, similarly to the eighth characteristic configuration, the case where the additive effect on colour production in the back-side image changes unexpectedly according to the transmittance of the sheet-like base material in the light transmission usage mode can be inhibited. Accordingly, it is possible to form a light-reflection/light-transmission image sheet that enables an even more natural and clear image to appear in both light reflection and light transmission usage modes, regardless of the transmittance of the sheet-like base material.

An eighteenth characteristic configuration of the present invention is a light-reflection/light-transmission image sheet that includes, on a sheet-like base material that has reflective and transmissive properties, a front-side image and a back-side image that overlie each other with the sheet-like base material interposed therebetween,
wherein the density distribution of the back-side image is a density distribution in which the density distribution of the front-side image has been adjusted so as to reduce the densities for a corresponding set colour segment based on an adjustment reference for the corresponding set colour segment.

According to the above configuration, the density distribution of the back-side image is a density distribution in which the density distribution of the front-side image is adjusted so as to reduce the densities thereof, and therefore the case where the contrast intensifies in the light transmission usage mode can be inhibited more effectively than with the conventional technique of using a density distribution for the back-side image that is the same as the density distribution for the front-side image, and this enables a natural and clear image to appear in both the light reflection and light transmission usage modes.

Moreover, according to the configuration above, in response to the fact that it is conceivable that the additive effect on colour production in the light transmission usage mode changes according to various elements of colour such as luminance in the back-side image, the density distribution of the back-side image is a density distribution in which the density distribution of the front-side image has been adjusted so as to reduce the densities for a corresponding set colour segment based on an adjustment reference for the corresponding set colour segment, and therefore by appropriately setting the colour segments such that the above-mentioned additive effect is desirable, an even more natural and clear image can appear in both the light reflection and light transmission usage modes.

Note that in the implementation of the eighteenth characteristic configuration, various types of adjustment references may be used, such as an adjustment reference by which the high-density portion that exceeds the set density is set to the set density or a density close in value thereto, an adjustment reference by which the densities in the density distribution are compressed using a set compression rate, and an adjustment reference for compressing using different compression rates in the high-density side and the low-density side in the density distribution.

A nineteenth characteristic configuration of the present invention is a method for forming a light-reflection/light-transmission image sheet including front and back images overlying each other with a sheet-like base material interposed therebetween, the light-reflection/light-transmission sheet being formed by printing a front-side image on the front side of a sheet-like base material that has reflective and transmissive properties, and printing a back-side image that is the reverse of the front-side image on the back side of the sheet-like base material in a state where the front and back images overlie each other,
wherein when printing the back-side image on the back side of the sheet-like base material, the density distribution of the back-side image is a density distribution in which the density distribution of the front-side image has been adjusted so as to reduce the densities for a corresponding set colour segment based on the adjustment reference for the corresponding set colour segment.

According to the above configuration, the density distribution of the back-side image is a density distribution in which the density distribution of the front-side image has been compressed so as to reduce the densities thereof, and therefore the case where the contrast intensifies in the light transmission usage mode can be inhibited more effectively than with the conventional technique of using a density distribution for the back-side image that is the same as the density distribution for the front-side image, and a light-reflection/light-transmission image sheet can be formed which enables a natural and clear image to appear in both the light reflection and light transmission usage modes.

Moreover, according to the configuration above, in response to the fact that it is conceivable that the additive effect on colour production in the light transmission mode changes according to various elements of colour such as luminance in the back-side image, the density distribution of the back-side image is a density distribution in which the density distribution of the front-side image has been adjusted so as to reduce the densities for the corresponding set colour segments based on an adjustment reference for the corresponding set colour segment, and therefore by appropriately setting the colour segment such that the above-mentioned additive effect is desirable, a light-reflection/light-transmission image sheet can be formed which enables an even more natural and clear image to appear in both the light reflection and light transmission usage modes.

Note that in the implementation of the nineteenth characteristic configuration, various types of adjustment references may be used, such as an adjustment reference by which the high-density portion that exceeds the set density is set to the set density or a density close in value thereto, an adjustment reference by which the densities in the density distribution are compressed using a set compression rate, and an adjustment reference for compressing using different compression rates in the high-density side and the low-density side in the density distribution.

In a twentieth characteristic configuration of the present invention, the set colour segment is a colour segment corresponding to a colour expressed in a colour space.

According to the configuration above, similarly to the sixth and fifteenth characteristic configurations, it is possible to allow an apparatus that handles colour such as an image processing apparatus or a printing apparatus to perform the density adjustment processing for the back-side image using the processing method for that apparatus. Accordingly, the density adjustment for the back-side image can be easily performed also when employing a method for reducing the densities for corresponding set colour segments.

In a twenty-first characteristic configuration of the present invention, the set colour segment is a colour segment corresponding to an ink colour.

According to the configuration above, similarly to the above-described seventh and sixteenth characteristic configurations, the density adjustment processing for the back-side image performed using the printing apparatus can be simplified compared to the case where the colour segments are set so as to span a plurality of ink colours. Accordingly, the density adjustment for the back-side image can be easily performed also when employing a method for reducing the densities for corresponding set colour segments. Note that it is particularly preferable that the set colour segment is a colour segment corresponding to a CMYK colour, which corresponds to a colour expressed in a colour space and to an ink colour.

In a twenty-second characteristic configuration, the adjustment reference is changed according to the transmittance of the sheet-like base material.

According to the configuration above, similarly to the above-described eighth and seventeenth characteristic configurations, the case where the additive effect on colour production in the back-side image changes unexpectedly according to the transmittance of the sheet-like base material in the light transmission usage mode can be effectively inhibited. Accordingly, it is possible to form a light-reflection/light-transmission image sheet that enables an even more natural and clear image to appear in both the light reflection and light transmission usage modes, regardless of the transmittance of the sheet-like base material.

### Brief Description of the Drawings

Fig. 1 is a cross-sectional diagram schematically illustrating an example of a layer configuration of an image sheet.
Fig. 2 is a graph illustrating a relationship between the densities of a front-side image and the densities of a back-side image according to a first embodiment.
Fig. 3(a) is a graph illustrating the illuminance distribution of a front-side image according to the first embodiment, and Fig. 3(b) is a graph illustrating the illuminance distribution of a back-side image according to the first embodiment.
Fig. 4A is a diagram for schematically describing a step of forming the front-side image, Fig. 4B is a diagram for schematically describing a step of measuring the densities of the front-side image, and Fig. 4C is a diagram for schematically describing a step of forming the back-side image.

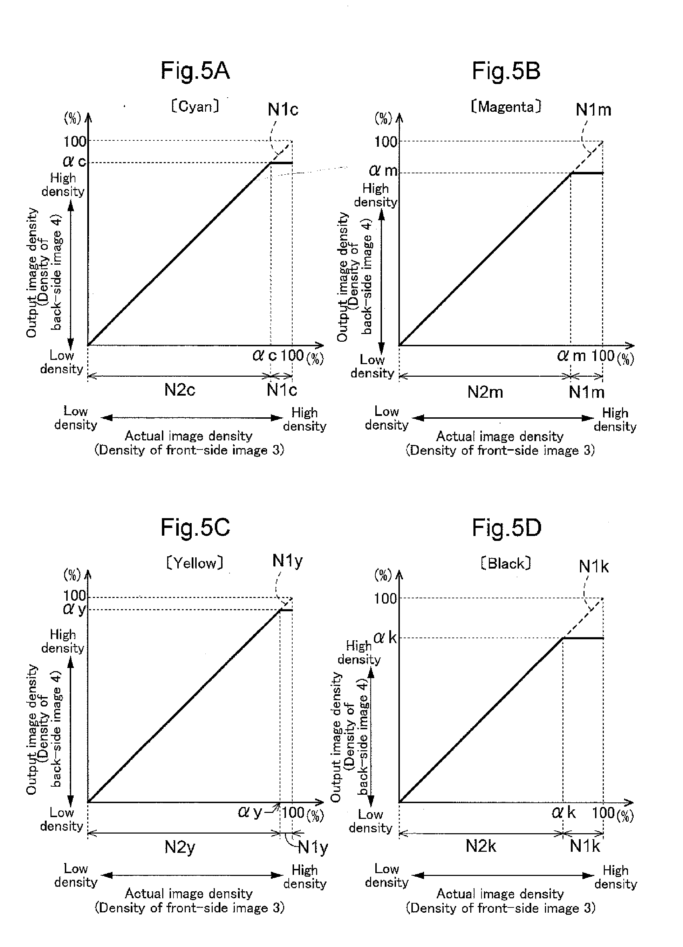

Fig. 5A is a graph illustrating the relationship between the densities of the front-side image and the densities of the back-side image according to a second embodiment (cyan), Fig. 5B is a graph illustrating the relationship between the densities of the front-side image and the densities of the back-side image according to the second embodiment (magenta), Fig. 5C is a graph illustrating the relationship between the densities of the front-side image and the densities of the back-side image according to the second embodiment (yellow), and Fig. 5D is a graph illustrating the relationship between the densities of the front-side image and the densities of the back-side image according to the second embodiment (black).
Fig. 6(a) is a graph illustrating the illuminance distribution of the front-side image according to the second embodiment (cyan), and Fig. 6(b) is a graph illustrating the illuminance distribution of the back-side image according to the second embodiment (cyan).
Fig. 7(a) is a graph illustrating the illuminance distribution of the front-side image according to the second embodiment (magenta), and Fig. 7(b) is a graph illustrating the illuminance distribution of the back-side image according to the second embodiment (magenta).
Fig. 8(a) is a graph illustrating the illuminance distribution of the front-side image according to the second embodiment (yellow), and Fig. 8(b) is a graph illustrating the illuminance distribution of the back-side image according to the second embodiment (yellow).
Fig. 9(a) is a graph illustrating the illuminance distribution of the front-side image according to the second embodiment (black), and Fig. 9(b) is a graph illustrating the illuminance distribution of the back-side image according to the second embodiment (black).

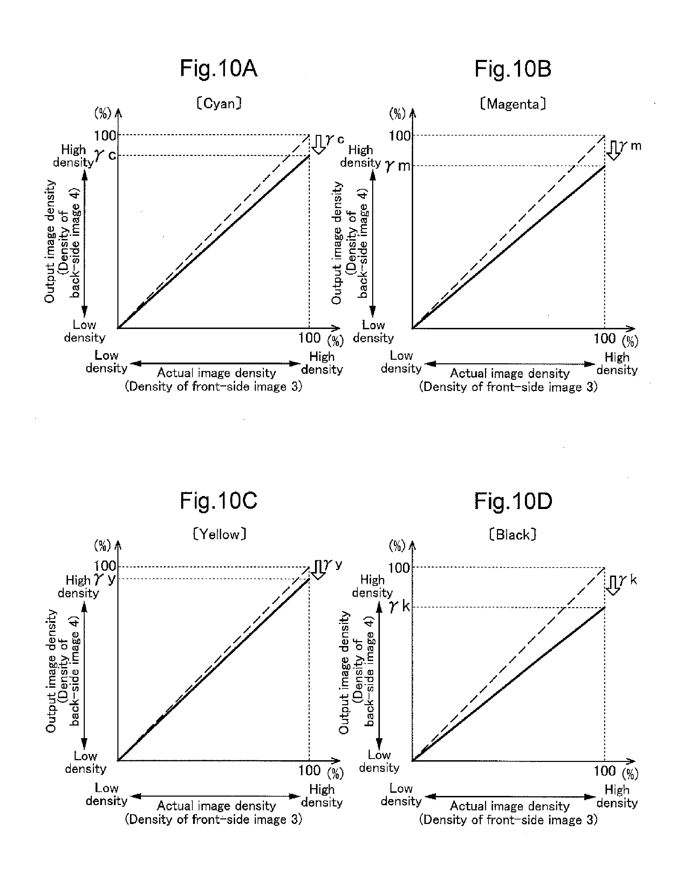

Fig. 10A is a graph illustrating the relationship between the densities of the front-side image and the densities of the back-side image according to a third embodiment (cyan), Fig. 10B is a graph illustrating the relationship between the densities of the front-side image and the densities of the back-side image according to the third embodiment (magenta), Fig. 10C is a graph illustrating the relationship between the densities of the front-side image and the densities of the back-side image according to the third embodiment (yellow), and Fig. 10D is a graph illustrating the relationship between the densities of the front-side image and the densities of the back-side image according to the third embodiment (black).
Fig. 11A is a graph illustrating the illuminance distribution of the front-side image according to the third embodiment (cyan), and Fig.11B is a graph illustrating the illuminance distribution of the back-side image according to the third embodiment (cyan).
Fig. 12A is a graph illustrating the illuminance distribution of the front-side image according to the third embodiment (magenta), and Fig. 12B is a graph illustrating the illuminance distribution of the back-side image according to the third embodiment (magenta).
Fig. 13A is a graph illustrating the illuminance distribution of the front-side image according to the third embodiment (yellow), and Fig. 13B is a graph illustrating the illuminance distribution of the back-side image according to the third embodiment (yellow).
Fig. 14A is a graph illustrating the illuminance distribution of the front-side image according to the second embodiment (black), and Fig. 14B is a graph illustrating the illuminance distribution of the back-side image according to the second embodiment (black).
Fig. 15 is a table showing the relationship between the transmittance of a sheet-like base material and an adjustment value.
Fig. 16 is a graph illustrating a relationship between the densities of the front-side image and the densities of the back-side image according to another embodiment.

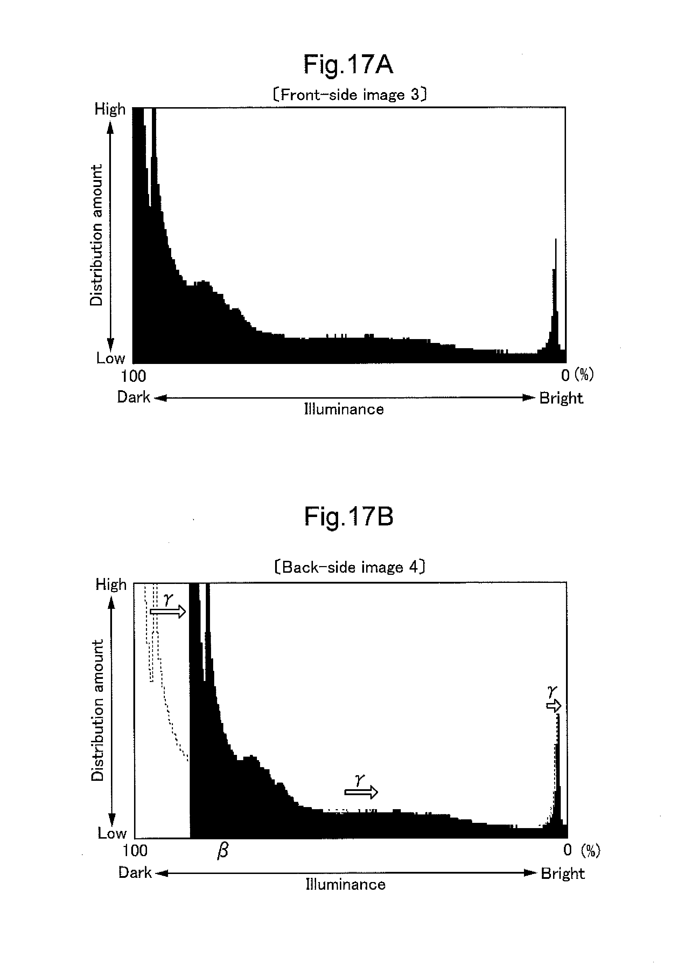

Fig. 17A is a graph illustrating the illuminance distribution of the front-side image according to the other embodiment, and Fig. 17B is a graph illustrating the illuminance distribution of the back-side image according to the other embodiment.

### Best Mode for Carrying out the Invention

### First Embodiment

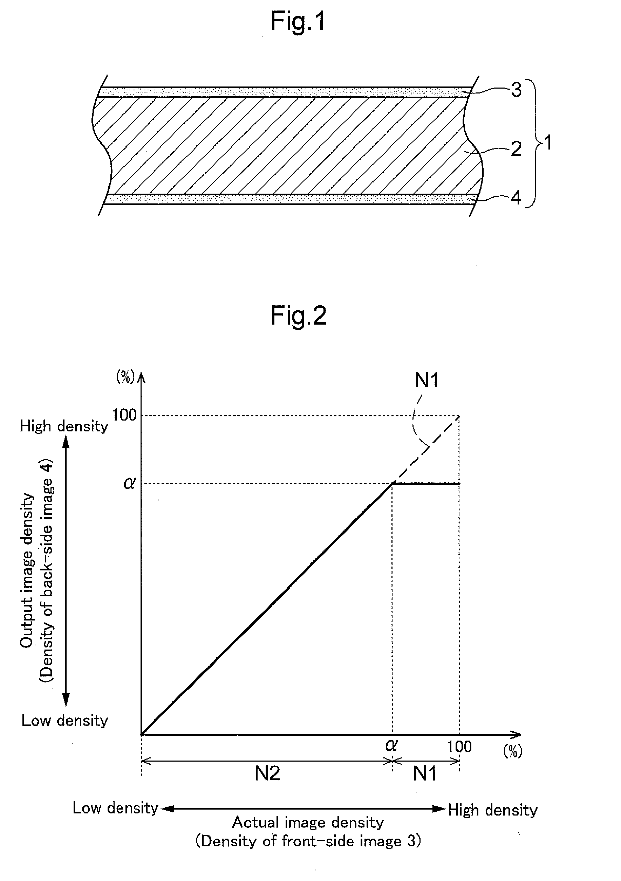

Fig. 1 shows the layer configuration of a light-reflection/light-transmission image sheet 1 that is used in an advertisement panel or the like, the image sheet 1 being constituted by a translucent or milk-white sheet-like base material 2 that is constituted by a material having appropriate reflective and transmissive properties that appropriately reflects light from the front side and appropriately transmits light from the back side, a front-side image 3 formed on the front side of the sheet-like base material 2, and a back-side image 4 formed on the back side of the sheet-like base material 2.

The sheet-like base material 2 is mainly constituted by a urethane resin layer (an example of a resin material layer), and is constituted such that the front side and back side are coated as needed with an acrylic resin or the like that includes titanium oxide and silica.

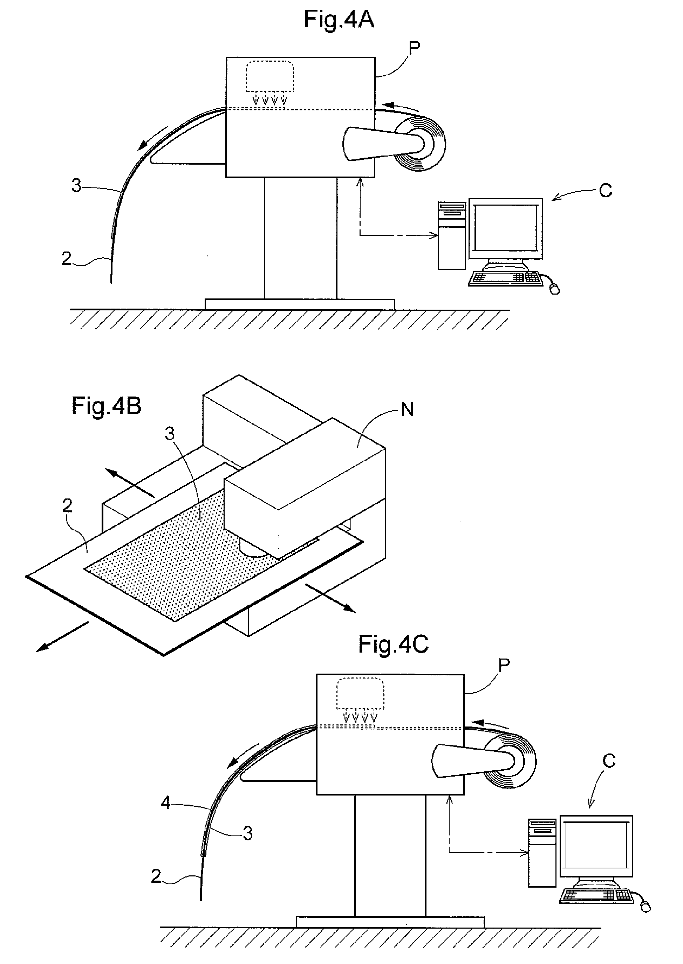

The front-side image 3 is constituted by an ink layer printed by a so-called inkjet type of printer apparatus P (see Fig. 4). Also, the back-side image 4 is constituted by an ink layer printed by the printer apparatus P in a state overlying the front-side image 3 with the sheet-like base material 2 interposed therebetween, and the content thereof is obtained by reversing the front-side image 3.

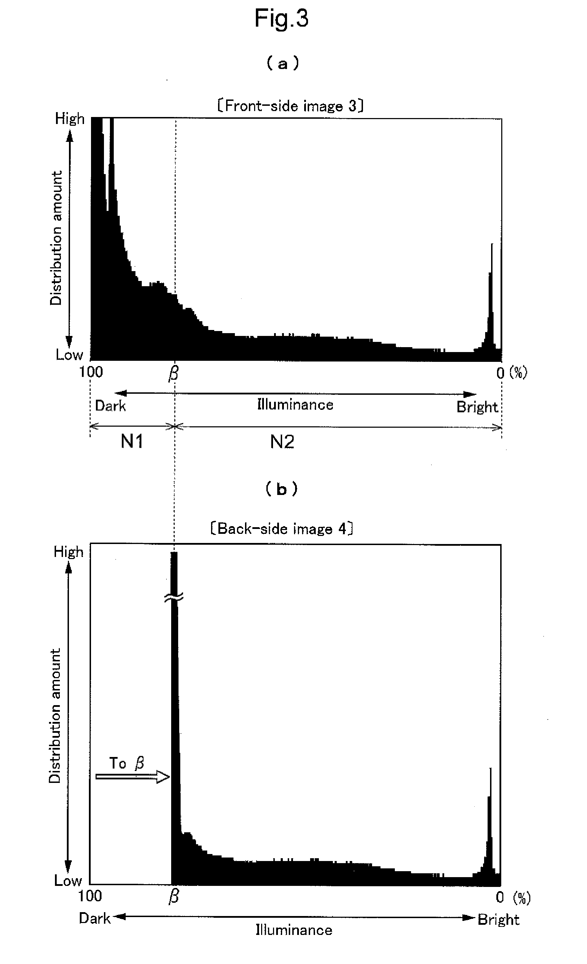

Then, with the image sheet 1, as shown in Fig. 2 and Fig. 3, the density distribution of the back-side image 4 has been adjusted in accordance with a reference for adjusting the density distribution of the front-side image 3 so as to reduce the densities so that a natural, clear, and preferable image can be displayed when using both the reflected sunlight during day-time and the transmitted backlight during night-time. In other words, the densities of the back-side image 4 are adjusted with respect to the densities of the front-side image 3.

Note that Fig. 2 is a graph illustrating the relationship between the densities of the front-side image 3 and the back-side image 4, and Fig. 3 shows graphs indicating the illuminance distributions of the front-side and back-side images 3 and 4 (for the sake of convenience, illuminance distributions that substantially correspond to the density distributions have been measured).

To give a more detailed description of the density adjustment for the back-side image 4, as shown in Fig. 2 and Fig. 3, the density distribution of the back-side image 4 is obtained by uniformly reducing the densities of a high-density portion N1 (i.e., the portion from density α to density 100 (%) indicated by the imaginary line in Fig. 2, and the portion from density β to density 100 (%) in Fig. 3(a)) whose densities exceed a set density α (e.g., 80) in the density distribution of the front-side image 3 to the set density α (set density α or a density that is close in value thereto).

In other words, in the back-side image 4, decreasing the densities of the high-density portion that has a large additive effect on colour production and has a large influence on the overall contrast in the light transmission usage mode effectively inhibits the case where the contrast in the image sheet 1 intensifies in the light transmission usage mode.

Also, by uniformly reducing the high-density portion N1 in the front-side image 3 to the set density α to simplify the content of the density distribution of the back-side image 4, the density adjustment for the back-side image 4 can be performed easily.

Furthermore, in order to perform the density adjustment for the back-side image 4 with further ease, the density distribution of the back-side image 4 on the image sheet 1 is obtained by setting a portion N2 (the portion from density 0 to density α (%) in Fig. 2 and the portion from density 0 to density β in Fig. 3(a)) that is not included in the high-density portion N1 in the density distribution of the front-side image 3 to the same densities as those of the front-side image 3.

The image sheet 1 that is constituted as described above can be formed using the following method for example.

First, as shown in Fig. 4A, image data is transferred from a computer C that includes commercially-available image software by which image processing is possible, and the like, and thereby the front-side image 3 is printed on the front side of the sheet-like base material 2 by the inkjet printer apparatus P.

Next, as shown in Fig. 4B, multiple locations on the sheet-like base material 2 on which the front-side image 3 has been formed are measured using a commercially-available densitometer T to determine the set density α that is to be the upper limit density of the back-side image 4.

In the present example, the densities of one or more apparent high-density portions, one or more apparent low-density portions, and one or more intermediate-density portions between the high-density portions and low-density portions on the front-side image 3 are measured using a densitometer N, and based on the measurement results, the set density α is determined according to the actual circumstances.

Then, using settings for the upper limit print density of the printer apparatus P (or processing for image data performed using image software in the computer apparatus C) and the like, the density distribution of the back-side image 4 is obtained in which the high-density portion N1 that exceeds the set density α in the density distribution of the front-side image 3 has been replaced with the set density α and the portion N2 that is not included in the high-density portion N1 in the density distribution of the front-side image 3 has the same densities as the front-side image 3. With this distribution, the printer apparatus P prints the back-side image 4 on the back side of the sheet-like base material 2.

### Second Embodiment

The first embodiment above described, as an example, the case where the density distribution of the back-side image 4 on the image sheet 1 is adjusted according to a uniform adjustment reference, but the density distribution of the back-side image 4 may be adjusted according to adjustment references for corresponding set colour segments.

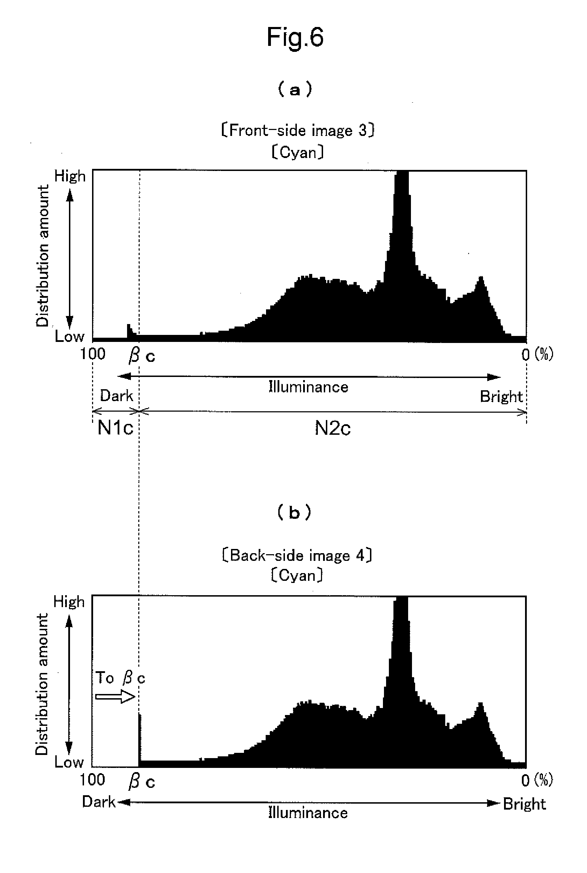

Fig. 5 shows graphs illustrating the relationships between the densities of the front-side image 3 and the densities of the back-side image 4 for the corresponding set colour segments in the image sheet 1 of the second embodiment, and Fig. 6 to Fig. 9 are graphs indicating the illuminance distributions for the corresponding set colour segments of the front-side and back-side images 3 and 4 on the image sheet 1 of the second embodiment (for the sake of convenience, illuminance distributions substantially corresponding to the density distributions have been measured).

As shown in Fig. 5 to Fig. 9, the density distribution of the back-side image 4 on the image sheet 1 in the second embodiment is obtained in which the densities of high-density portions N1c, N1m, N1y, and N1k for the corresponding set colour segments that exceed set densities αc, αm, αy, and αk for the corresponding set colour segments in the density distributions of the corresponding set colour segments in the front-side image 3 have been reduced to the set densities αc, αm, αy, and αk (set densities or densities close to those values) for the corresponding set colour segments.

In other words, similarly to the first embodiment, reducing the densities of the high-density portions N1c, N1m, N1y, and N1k that have a large additive effect on colour production and have a large influence on the overall contrast in the light transmission usage mode on the back-side image 4 of the image sheet 1 effectively inhibits the case where the contrast of the image sheet 1 intensifies in the light transmission usage mode.

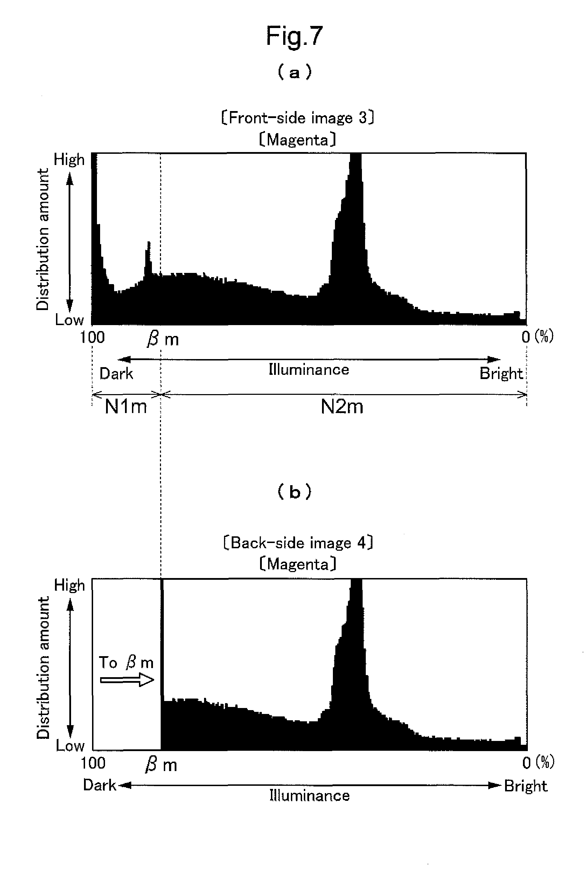

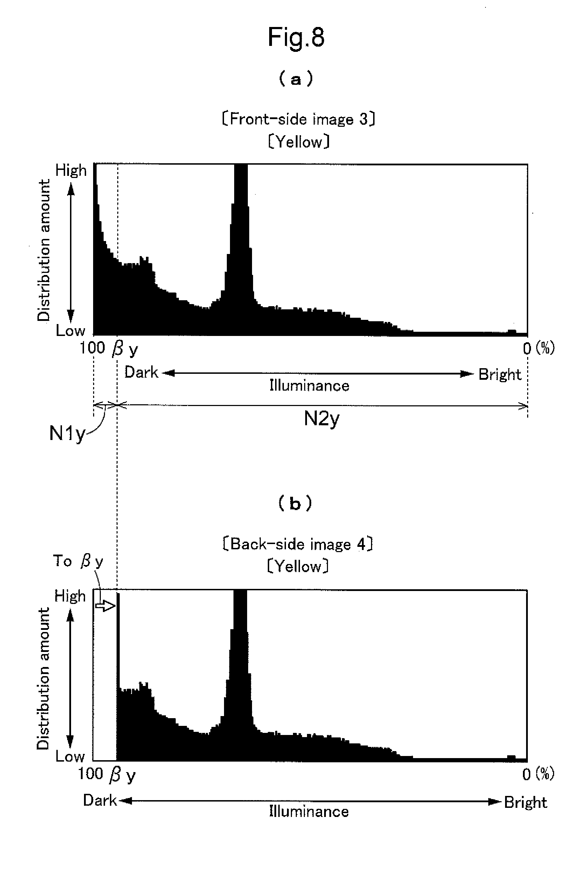

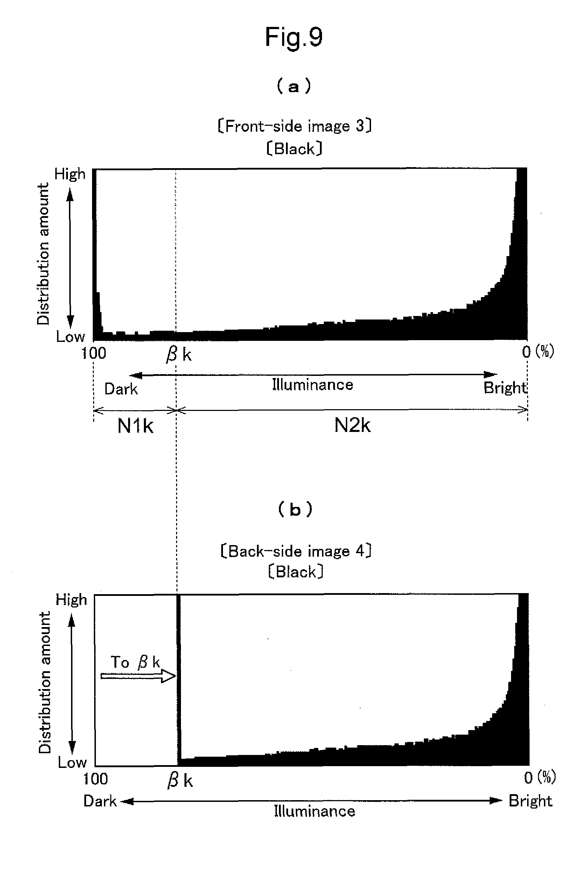

In the present example, there are four set colour segments (which are an example of a plurality of colour segments), namely "cyan" (see Fig. 5A, Fig. 6), "magenta" (see Fig. 5B, Fig. 7), "yellow" (see Fig. 5C, Fig. 8), and "key plate (black in the present example)" (see Fig. 5D, Fig. 9), which are colours expressed in a CMYK colour space and are ink colours.

Also, in the present example, the set density αc for the set colour segment "cyan" is set to 90 (%), the set density αm for the set colour segment "magenta" is set to 85 (%), the set density αy for the set colour segment "yellow" is set to 95 (%), and the set density αk for the set colour segment "black" is set to 80 (%).

In other words, due to the set colour segments being colour segments that correspond to the respective colours of CMYK, which are often employed in processing methods for image processing apparatuses and printing apparatuses and are often employed as ink colours for printing, the density adjustment of the back-side image 4 on the image sheet 1 can be easily performed also when employing an adjustment method of reducing the densities for corresponding set colour segments.

Furthermore, in order to perform the density adjustment for the back-side image 4 even more easily, the density distribution of the back-side image 4 on the image sheet 1 is obtained in which the portions N2c, N2m, N2y, and N2k that are not included in the high-density portions N1c, N1m, N1y, and N1k in the density distributions for the four corresponding set colour segments in the front-side image 3 are the same densities as those of the front-side image 3.

Note that N2c is the portion in Fig. 5A from density 0 to density αc (%) and the portion in Fig. 6(b) from illuminance 0 to illuminance βc (%). N2m is the portion in Fig. 5B between density 0 and density αm (%) and the portion in Fig. 7(b) between illuminance 0 and illuminance βm (%).

Also, N2y is the portion in Fig. 5C between density 0 and density αy (%) and the portion in Fig. 8(b) between illuminance 0 and illuminance βy (%). N2k is the portion in Fig. 5D between density 0 and density αk (%) and the portion in Fig. 9(b) between illuminance 0 and illuminance βk (%).

The thus-configured image sheet 1 can be formed in the following manner. Using settings for the print density of the printer apparatus P (or processing for image data performed using image software in the computer apparatus C) and the like, the density distribution of the back-side image 4 is obtained in which the high-density portions (N1c, N1m, N1y, and N1k) that exceed the set densities (αc, αm, αy, αk) in the density distributions for the corresponding set colour segments of the front-side image 3 have been replaced with the set densities (αc, αm, αy, and αk) and the portions (N2c, N2m, N2y, and N2k) that are not included in the high-density portions (N1c, N1m, N1y, and N1k) in the density distributions for the corresponding set colour segments of the front-side image 3 have the same densities as the front-side image 3. With this density distribution, the printer apparatus P described in the first embodiment above prints the back-side image 4 on the back side of the sheet-like base material.

Note that other configurations for the image sheet 1 and other configurations for the method for forming the image sheet 1 are the same as those described in the first embodiment above, and therefore the description thereof will not be repeated.

### Third Embodiment

In the second embodiment, a case where the density distribution of the back-side image 4 is obtained by reducing the densities of high-density portions that exceed the set densities for the corresponding set colour segments in the density distributions for the corresponding set colour segments of the front-side image 3 to the set densities of the corresponding set colour segments is described as an example of adjusting the density distribution of the back-side image 4 on the image sheet 1 using adjustment references for the corresponding set colour segments, but the present invention is not limited to this.

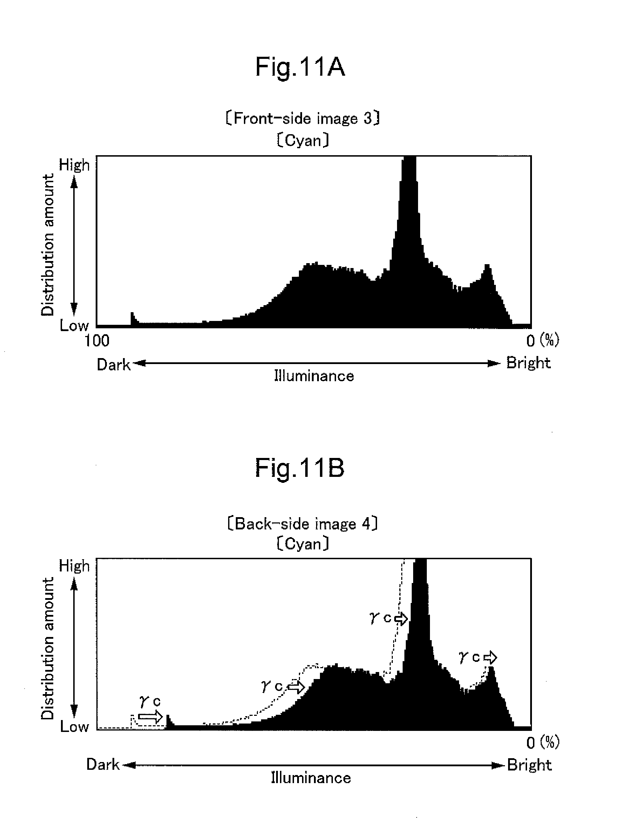

Fig. 10 shows graphs illustrating the relationships between the densities of the front-side image 3 and the densities of the back-side image 4 for the corresponding set colour segments, and Fig. 11 to Fig. 14 are graphs indicating the illuminance distributions for the corresponding set colour segments of the front and back images 3 and 4 on the image sheet 1 in the second embodiment (for the sake of convenience, illuminance distributions substantially corresponding to the density distributions have been measured).

As shown in Fig. 10 to Fig. 14, the density distribution of the back-side image 4 on the image sheet 1 in the third embodiment is a density distribution in which the densities in the density distributions for the corresponding set colour segments of the front-side image 3 have been compressed using set compression rates γc, γm, γy, and γk for the corresponding set colour segments. In other words, the density distribution of the back-side image 4 is a density distribution in which the density distributions of the corresponding set colour segments of the front-side image 3 have been compressed using the set compression rates γc, γm, γy, and γk for the corresponding set colour segments so as to reduce the densities thereof.

That is to say, in the back-side image 4, the densities on the high-density side, which have a large additive effect on colour production and have a large influence on the overall contrast in the light transmission usage mode, are quantitatively reduced such that the higher the densities are, the more they are reduced, and this effectively inhibits the case where the contrast in the image sheet 1 intensifies in the light transmission usage mode.

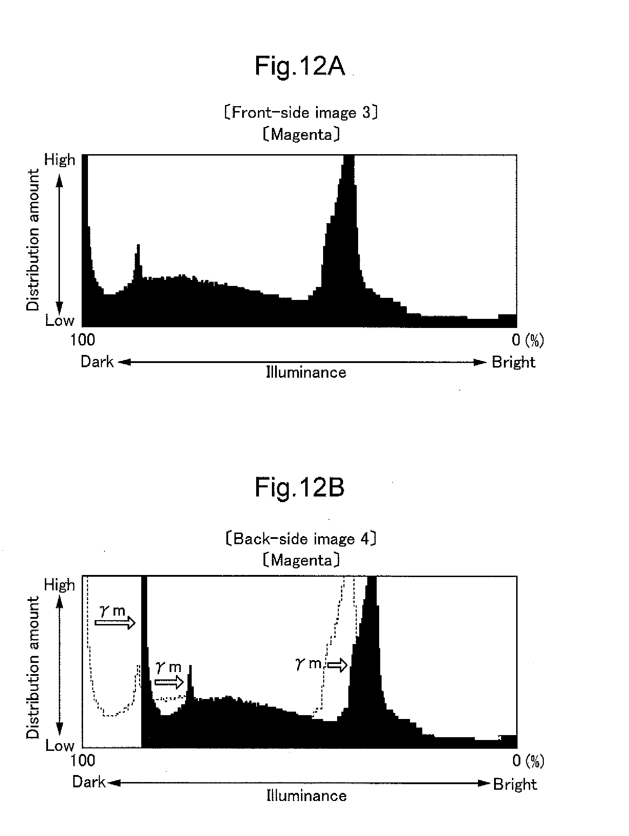

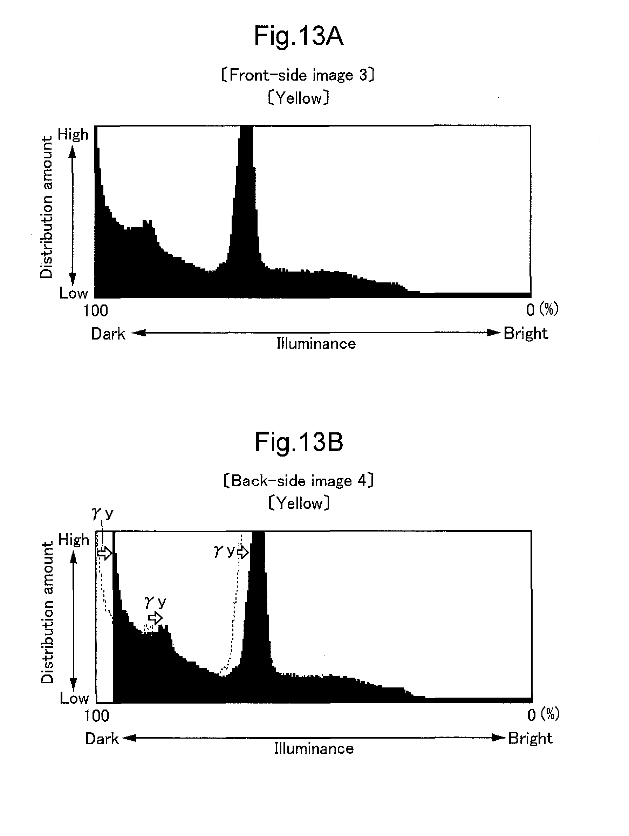

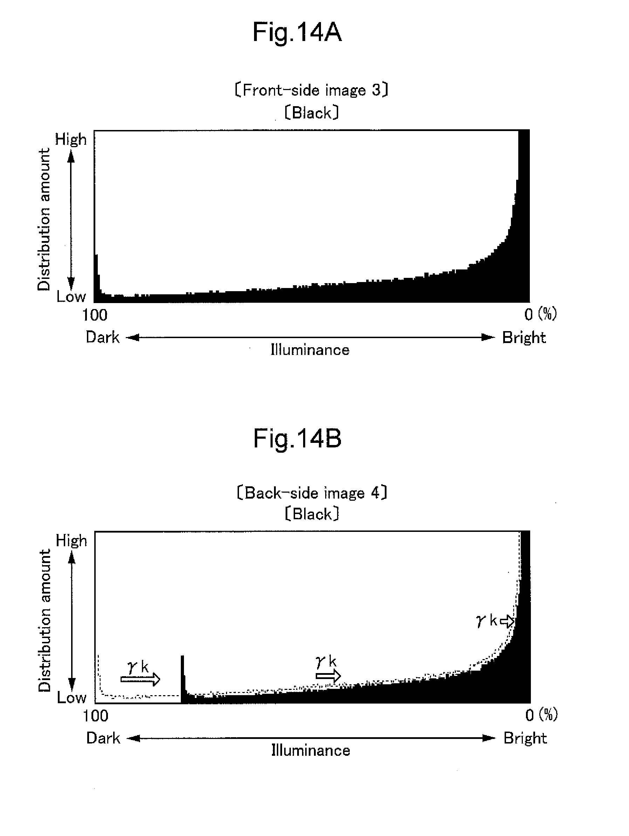

Similarly to the above-described second embodiment, there are four set colour segments (which are an example of a plurality of colour segments), namely "cyan" (see Fig. 10A, Fig. 11), "magenta" (see Fig. 10B, Fig. 12), "yellow" (see Fig. 10C, Fig. 13), and "key plate (black in the present example)" (see Fig. 10D, Fig. 14), which are colours expressed in a CMYK colour space and are ink colours.

Also, in the present example, the set compression rate γc for the set colour segment "cyan" is set to 90 (%), the set compression rate γm for the set colour segment "magenta" is set to 85 (%), the set compression rate γy for the set colour segment "yellow" is set to 95 (%), and the set compression rate γk for the set colour segment "black" is set to 80 (%).

In other words, due to the set colour segments of the image sheet 1 being colour segments for the corresponding colours of CMYK, which are often employed in processing methods for image processing apparatuses and printing apparatuses and are often employed as printing ink colours, the density adjustment of the back-side image 4 can be easily performed also when employing an adjustment method for reducing the densities for the corresponding set colour segments.

The thus-configured image sheet 1 can be formed in the following manner. Using settings for the print density of the printer apparatus P (or processing for image data performed using image software in the computer apparatus C) and the like, the density distribution of the back-side image 4 is obtained in which the densities in the density distributions for the corresponding set colour segments of the front-side image 3 have been compressed using the compression rates for the corresponding set colour segments (γc, γm, γy, and γk). With this density distribution, the printer apparatus P described in the first embodiment above prints the back-side image 4 on the back side of the sheet-like base material 2.

Note that other configurations for the image sheet 1 and other configurations for the method for forming the image sheet 1 are the same as those described in the first embodiment above, and therefore the description thereof will not be repeated.

### Other Embodiments

(1) As an improvement for the above-described embodiments, the adjustment value for the density distribution of the back-side image 4 (the set density or set compression rate described in the embodiments above) may be changed according to the transmittance (%) of the sheet-like base material 2.

That is to say, the effect of the back-side image 4 intensifying colour increases as the transmittance of the sheet-like base material 2 increases, and in contrast, the effect of the back-side image 4 intensifying colour decreases as the transmittance of the sheet-like base material 2 decreases in the mode of use using transmitted light, and therefore changing the adjustment value such that the density of the back-side image 4 is increased as the transmittance of the sheet-like base material 2 increases and changing the adjustment value such that the density of the back-side image 4 is reduced as the transmittance of the sheet-like base material 2 decreases is preferable for obtaining a clear image in the light transmission usage mode.

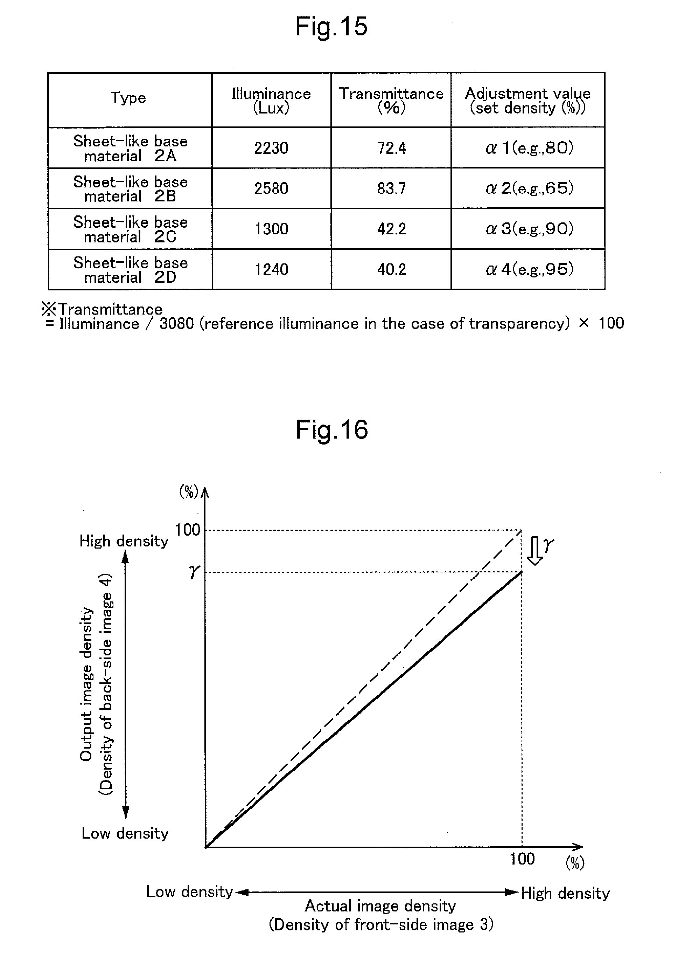

For example, as shown in Fig. 15, if the sheet-like base material 2B having the highest transmittance (83.7) among the different types of sheet-like base materials 2A to 2D is used, it is sufficient that a set density α2 according to which the density is reduced to the greatest extent (e.g., 65) is used, and if the sheet-like base material 2A having the second-highest transmittance (72.4) is used, it is sufficient that a set density α1 (e.g., 80) according to which the density is reduced to a greater extent than the set density α2 is used.

On the other hand, in the case of using the sheet-like base material 2D having the lowest transmittance value (40.2), it is sufficient that a set density α4 according to which the density is increased to the greatest extent (e.g., 95) is used, and in the case of using the sheet-like base material 2C having the second-lowest transmittance value (42.2), it is sufficient that a set density α3 (e.g., 90) according to which the density is reduced to a greater extent than the set density α4 and is increased to a greater extent than the set density α1 or a2 is used. Note that the transmittances in Fig. 15 are numerical values calculated based on illuminance values measured by an illuminometer.
(2) The above-described third embodiment described an exemplary case in which the density distribution of the back-side image 4 is obtained by compressing the densities in the density distributions for the corresponding set colour segments of the front-side image 3 using the compression rates γc, γm, γy, and γk for the corresponding set colour segments, but as shown in Fig. 16, the density distribution of the back-side image 4 may be obtained by compressing the densities in the density distribution of the front-side image 3 using a single set compression rate γ.
(3) The above-described first and second embodiments described an example of the density distribution of the back-side image 4 in which a portion that is not included in the high-density portion in the density distribution of the front-side image 3 has the same densities as the front-side image 3, but the portion that is not included in the high-density portion in the density distribution of the front-side image 3 need not have the same densities as the front-side image 3.
(4) The above-described embodiments described an exemplary case in which the front and back-side images 3 and 4 are each constituted by one ink layer, but the front-side and back-side images 3 and 4 may each be constituted by multiple ink layers.
(5) The above-described second and third embodiments described an exemplary case in which the set colour segments are colour segments corresponding to CMYK colours, but various types of colour segments can be used, such as colour segments corresponding to RGB colours or to a predetermined luminosity range.

### Industrial Applicability

The present invention can be applied preferably not only to advertisement panels but also to various objects that need to produce colour during both night-time and day-time.

### Description of Reference Signs

- 1: light-reflection/light-transmission image sheet
- 2, 2A, 2B, 2C, 2D: sheet-like base material
- 3: front-side image
- 4: back-side image
- N1: high-density portion
- N1c, N1m, N1y, N1k: high-density portion (set colour segment)
- N2: portion not included in high-density portion
- N2c, N2m, N2y, N2k: portion not included in high-density portion (set colour segment)
- α: set density
- αc, αm, αy, αk: set density (set colour segment)
- γ: set compression rate (set colour segment)
- γc, γm, γy, γk: set compression rate (set colour segment)
- P: print apparatus
- T: densitometer

## Claims

1. A light-reflection/light-transmission image sheet that includes, on a sheet-like base material that has reflective and transmissive properties, a front-side image and a back-side image that overlie each other with the sheet-like base material interposed therebetween,
wherein the density distribution of the back-side image is a density distribution in which a high-density portion that exceeds a set density in the density distribution of the front-side image has been reduced to the set density or a density close in value thereto.

2. The light-reflection/light-transmission image sheet according to claim 1, wherein the set density is set for each of a plurality of set colour segments, and the density distribution of the back-side image is a density distribution in which a high-density portion that exceeds the set density for a corresponding set colour segment in the density distribution for the corresponding set colour segment of the front-side image has been reduced to the set density for the corresponding set colour segment or to a density close in value thereto.

3. A method for forming a light-reflection/light-transmission image sheet including front and back images overlying each other with a sheet-like base material interposed therebetween, the light-reflection/light-transmission image sheet being formed by printing a front-side image on the front side of a sheet-like base material that has reflective and transmissive properties, and printing a back-side image that is the reverse of the front-side image on the back side of the sheet-like base material in a state where the front and back images overlie each other,
wherein when printing the back-side image on the back side of the sheet-like base material, the density distribution of the back-side image is a density distribution in which a high-density portion that exceeds a set density in the density distribution of the front-side image has been replaced with the set density or a density that is close in value thereto.

4. The method for forming a light-reflection/light-transmission image sheet according to claim 3, wherein the density distribution of the back-side image is a density distribution in which the high-density portion that exceeds the set density in the density distribution of the front-side image has been replaced with the set density or a density close in value thereto and a portion that is not included in the high-density portion in the density distribution of the front-side image has the same densities as the front-side image.

5. The method for forming a light-reflection/light-transmission image sheet according to claim 3 or 4, wherein the set density is set for each of a plurality of set colour segments, and the density distribution of the back-side image is a density distribution in which a high-density portion that exceeds the set density for a corresponding set colour segment in the density distribution for the corresponding set colour segment of the front-side image has been replaced with the set density for the corresponding set colour segment or a density close in value thereto.

6. The method for forming a light-reflection/light-transmission image sheet according to claim 5, wherein the set colour segment is a colour segment corresponding to a colour expressed in a colour space.

7. The method for forming a light-reflection/light-transmission image sheet according to claim 5 or 6, wherein the set colour segment is a colour segment corresponding to an ink colour.

8. The method for forming a light-reflection/light-transmission image sheet according to any one of claims 3 to 7, wherein the set density is changed according to the transmittance of the sheet-like base material.

9. The method for forming a light-reflection/light-transmission image sheet according to any one of claims 3 to 8, wherein in order to determine the set density, the densities of at least one or more apparent high-density portions in the front-side image are measured using a densitometer.

10. The method for forming a light-reflection/light-transmission image sheet according to claim 9, wherein the densities of at least one or more portions that are not included in the apparent high-density portions in the front-side image are furthermore measured using a densitometer in order to determine the set density.

11. A light-reflection/light-transmission image sheet that includes, on a sheet-like base material that has reflective and transmissive properties, a front-side image and a back-side image that overlie each other with the sheet-like base material interposed therebetween,
wherein the density distribution of the back-side image is a density distribution in which the densities in the density distribution of the front-side image have been compressed using a set compression rate.

12. The light-reflection/light-transmission image sheet according to claim 11, wherein the set compression rate is determined for each of a plurality of set colour segments, and the density distribution of the back-side image is a density distribution in which the densities in the density distribution for a corresponding set colour segment of the front-side image have been compressed using the compression rate for the corresponding set colour segment.

13. A method for forming a light-reflection/light-transmission image sheet including front and back images overlying each other with a sheet-like base material interposed therebetween, the light-reflection/light-transmission image sheet being formed by printing a front-side image on the front side of a sheet-like base material that has reflective and transmissive properties, and printing a back-side image that is the reverse of the front-side image on the back side of the sheet-like base material in a state where the front and back images overlie each other,
wherein when printing the back-side image on the back side of the sheet-like base material, the density distribution of the back-side image is a density distribution in which the densities in the density distribution of the front-side image have been compressed using a set compression rate.

14. The method for forming a light-reflection/light-transmission image sheet according to claim 13, wherein the set compression rate is determined for each of a plurality of set colour segments, and the density distribution of the back-side image is a density distribution in which the densities in the density distribution for a corresponding set colour segment of the front-side image have been compressed using the compression rate for the corresponding set colour segment.

15. The method for forming a light-reflection/light-transmission image sheet according to claim 14, wherein the set colour segment is a colour segment corresponding to a colour expressed in a colour space.

16. The method for forming a light-reflection/light-transmission image sheet according to claim 14 or 15, wherein the set colour segment is a colour segment corresponding to an ink colour.

17. The method for forming a light-reflection/light-transmission image sheet according to any one of claims 13 to 16, wherein the set compression rate is changed according to the transmittance of the sheet-like base material.

18. A light-reflection/light-transmission image sheet that includes, on a sheet-like base material that has reflective and transmissive properties, a front-side image and a back-side image that overlie each other with the sheet-like base material interposed therebetween,
wherein the density distribution of the back-side image is a density distribution in which the density distribution of the front-side image has been adjusted so as to reduce the densities for a corresponding set colour segment based on an adjustment reference for the corresponding set colour segment.

19. A method for forming a light-reflection/light-transmission image sheet including front and back images overlying each other with a sheet-like base material interposed therebetween, the light-reflection/light-transmission image being formed by printing a front-side image on the front side of a sheet-like base material that has reflective and transmissive properties, and printing a back-side image that is the reverse of the front-side image on the back side of the sheet-like base material in a state where the front and back images overlie each other,
wherein when printing the back-side image on the back side of the sheet-like base material, the density distribution of the back-side image is a density distribution in which the density distribution of the front-side image has been adjusted so as to reduce the densities for a corresponding set colour segment based on the adjustment reference for the corresponding set colour segment.

20. The method for forming a light-reflection/light-transmission image sheet according to claim 19, wherein the set colour segment is a colour segment corresponding to a colour expressed in a colour space.

21. The method for forming a light-reflection/light-transmission image sheet according to claim 19 or 20, wherein the set colour segment is a colour segment corresponding to an ink colour.

22. The method for forming a light-reflection/light-transmission image sheet according to any one of claims 19 to 21, wherein the adjustment reference is changed according to the transmittance of the sheet-like base material.
